# FASCICULE DE BREVET EUROPEEN

(11) **EP 2 923 157 B1**
(45) Date de publication et mention de la délivrance du brevet: **05.10.2016**
(21) Numéro de dépôt: 13801609.2
(22) Date de dépôt: 15.11.2013
(51) Int. Cl.: F24J 2/07, F24J 2/51

(54) **RÉCEPTEUR SOLAIRE POUR CENTRALE À CONCENTRATION DE TYPE FRESNEL COMPRENANT UN CHÂSSIS EN MATÉRIAU ISOLANT ET SON PROCÉDÉ DE RÉALISATION**
SOLAREMPFÄNGER FÜR KONZENTRIERTES FRESNELSCHES SOLARKRAFTWERK MIT EINEM GERÜST AUS ISOLIERENDEM MATERIAL UND VERFAHREN ZUR HERSTELLUNG DAVON
SOLAR RECEIVER FOR FRESNEL CONCENTRATED SOLAR POWER PLANT INCLUDING A FRAME MADE OF AN INSULATING MATERIAL AND METHOD FOR MANUFACTURING SAME

(30) Priorité: 20.11.2012 FR 1203115
(43) Date de publication de la demande: 30.09.2015
(73) Titulaire: Commissariat à l'Energie Atomique et aux Energies Alternatives, 75015 Paris (FR)
(72) Inventeur: FLEURY, Gatien, F-04800 Gréoux-les-Bains (FR); BREGEARD, Etienne, F-66680 Canohes (FR); CIGNA, Julien, 38250 Villard de Lans (FR); COUTURIER, Raphaël, F-38360 Sassenage (FR)
(74) Mandataire: Talbot, Alexandre
(86) Numéro de dépôt international: PCT/FR2013/000295
(87) Numéro de publication internationale: WO 2014/080091

(56) Documents cités:
- WO-A1-2010/144554
- CN-A- 101 706 161
- US-A- 4 069 812
- US-A- 4 088 120
- US-A1- 2011 214 668

## Description

### Domaine technique de l'invention

L'invention est relative à un récepteur solaire et à son procédé de réalisation.

### État de la technique

Les centrales solaires à concentration (ou CSP pour Concentrating Solar Power) permettent de produire de l'énergie à partir du rayonnement solaire. Le rayonnement solaire est concentré sur un récepteur solaire comportant un absorbeur solaire dans lequel circule un fluide caloporteur. Le fluide caloporteur est ainsi chauffé et peut servir de source chaude dans un cycle thermodynamique. La concentration du rayonnement solaire sur l'absorbeur solaire permet d'atteindre des températures élevées et ainsi de bénéficier de rendements de conversion thermodynamiques importants.
Comme décrit dans les brevets US 4 069 812, CN 101 706 161 et US 2011/214668, les récepteurs solaires comportent généralement, en plus de l'absorbeur solaire, une structure solide permettant le maintien mécanique du récepteur solaire et un matériau isolant permettant de limiter les pertes de chaleur et d'obtenir un stockage prolongé.

Il existe quatre principales familles de centrales solaires qui se distinguent, entre autre, par la façon dont le rayonnement solaire est concentré sur l'absorbeur solaire. Les centrales solaires à concentration sont, par exemple, munies de : collecteurs cylindro-paraboliques à foyer linéaire, de concentrateurs linéaires de type Fresnel, de systèmes à tour à récepteur central ou encore de paraboles à foyer mobile.

Les technologies développées peuvent aussi se distinguer par leur méthode de transport du fluide caloporteur et de conversion thermodynamique. Les centrales peuvent par exemple, utiliser des turbines à vapeur, des turbines à gaz ou des moteurs Stirling.

Une centrale solaire de type Fresnel comprend des rangées de miroirs disposés au sol, lesdits miroirs réfléchissent le rayonnement incident sur un récepteur solaire. La longueur totale du récepteur varie de quelques centaines de mètres à quelques kilomètres. Le récepteur solaire est disposé en hauteur, en général entre 7m et 15m de haut, au moyen d'une structure métallique.

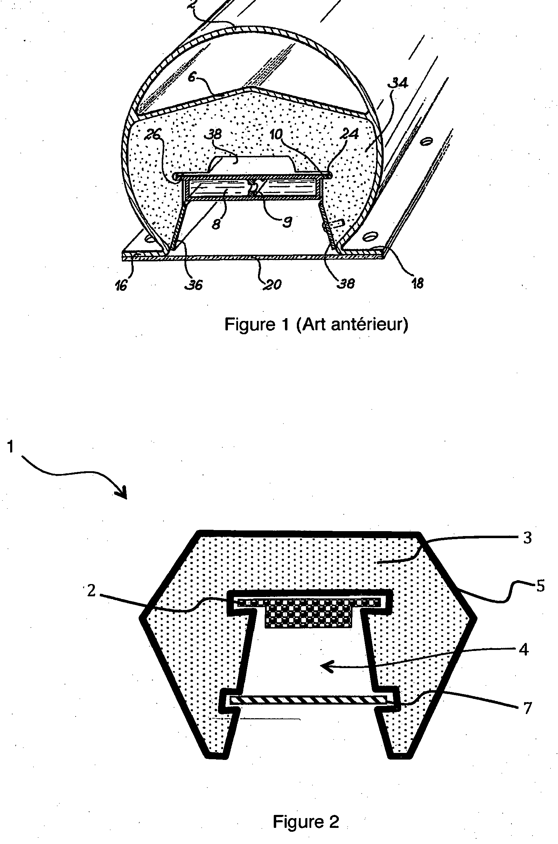

Classiquement et comme décrit dans les documents US2009/0056703 et FR2458032, un récepteur solaire 1 d'une centrale solaire à concentration de type Fresnel comprend, comme représenté sur la figure 1 :
- un absorbeur solaire, dans lequel circule un fluide caloporteur, est disposé le long de la ligne focale des miroirs
- un isolant thermique permettant d'éviter les pertes thermiques depuis l'absorbeur vers l'extérieur ;
- une structure porteuse métallique rigide permettant de soutenir l'isolant thermique et jouant le rôle de soutien mécanique du récepteur,
- des miroirs, dits miroirs secondaires, et disposés de part et d'autre de l'absorbeur de sorte à diminuer les pertes optiques,
- optionnellement un système d'isolation additionnel, disposé entre l'absorbeur et les miroirs au sol, permettant d'isoler l'absorbeur du milieu extérieur et donc de limiter les pertes par convection, tout en laissant passer le flux solaire ; il s'agit par exemple d'une vitre.

Dans le brevet FR2458032, la structure porteuse est une coque, de forme, cylindrique munie de renfort interne. La coque a une épaisseur de 2,8mm. Elle est remplie, en partie, par un isolant thermique comme par exemple de la laine de roche, de la mousse de verre ou de la silice.

L'isolant peut être un isolant solide, compact moulé ou usiné et permettant de supporter l'absorbeur solaire grâce à des rainures disposées le long de l'isolant thermique solide.
Dans le brevet US2009/0056703, l'absorbeur solaire est soutenu par une structure porteuse sous forme d'arches, de ponts et de poutres. L'isolant thermique est disposé entre ces différents éléments structuraux. Il est, par exemple, en fibre de verre, en mousse alvéolée ou en laine de verre.

Ces récepteurs solaires sont constitués de nombreuses pièces et nécessitent donc un temps d'assemblage relativement important. Pour avoir une bonne tenue en flexion et ne pas fléchir sous son propre poids, la structure porteuse doit être résistante et légère, mais elle est, généralement, en contrepartie assez haute, ce qui augmente la prise au vent, ce qui peut induire des mouvements latéraux du récepteur et donc des déformations du récepteur solaire, et ce qui génère un ombrage conséquent sur les miroirs, réduisant les performances de la centrale à concentration.

### Objet de l'invention

L'invention a pour but de remédier aux inconvénients de l'art antérieur et, en particulier, de proposer un récepteur solaire compact, à bas coût, facile à installer et présentant des performances améliorées.

On tend vers cet objet par les revendications annexées.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente, de manière schématique, en coupe, un récepteur solaire selon l'art antérieur,
- les figures 2, 4 et 5 représentent, de manière schématique, en coupe, des récepteurs solaires selon différents modes particuliers de réalisation,
- les figures 3 et 6 représentent, de manière schématique, en trois dimensions, un récepteur solaire selon différentes étapes de réalisation pour un mode particulier de réalisation.

### Description d'un mode de réalisation préférentiel de l'invention

Comme illustré à la figure 2, le récepteur solaire 1 pour la centrale à concentration de type Fresnel comprend :
- un absorbeur solaire 2 comprenant au moins un dispositif de circulation d'un fluide destiné à être parcouru par un fluide caloporteur,
- un châssis 3 en premier matériau isolant thermique structuré pour définir une rainure de logement 4 de l'absorbeur solaire 2,
- un système de maintien de l'absorbeur solaire 2 avec le châssis 3,
- un film de protection 5 recouvrant intégralement la surface latérale extérieure du châssis 3 de sorte à être disposé entre le châssis 3 et l'absorbeur solaire 2.

Le fluide caloporteur est, par exemple, de l'eau. Grâce à la focalisation du rayonnement solaire sur le récepteur solaire 1 et, plus particulièrement, sur l'absorbeur solaire 2, le fluide caloporteur est chauffé et peut alors servir de source chaude dans un cycle thermodynamique. Le rayonnement solaire est focalisé sur l'absorbeur solaire 2 grâce à des miroirs.
Le fluide caloporteur circule dans un dispositif de circulation. Il peut s'agir d'un tube ou d'un conduit, par exemple sous forme cylindrique. Selon d'autres modes de réalisation, la section du conduit peut être de forme carrée ou d'une autre forme plus complexe. Le dispositif est, avantageusement, fermé sur toute la longueur du récepteur afin de faire circuler le fluide sans perte de matière et est avantageusement élaboré à partir de matériaux permettant de minimiser les pertes de chaleur lors du passage du fluide.

Par châssis, on entend un cadre, un support rigide élaboré à partir d'une matière résistante, destiné à supporter un élément. Le châssis est capable de supporter son propre poids et celui de l'élément à supporter, c'est-à-dire qu'il ne fléchit pas sous son propre poids et celui de l'élément à supporter.
Le châssis 3 est, préférentiellement, en un premier matériau isolant thermique et rigide. Par rigide, on entend un matériau qui aura une fonction de tenue structurale, c'est-à-dire qui aura un module de rupture supérieur à 1 MPa. Le module de rupture est mesuré en suivant la procédure décrite dans la norme NF EN 993-6:1995.
Le matériau rigide ne se déforme pas, ou presque pas, sous la seule action de son propre poids, i.e. la forme initiale du châssis n'est pas déformée à plus de 5%, la déformation peut être mesurée par exemple au niveau de la flèche du châssis.
Le châssis 3 comprend plus de 90% d'au moins un matériau isolant ayant un module de rupture supérieur à 1 MPa. Le châssis 3 peut supporter son propre poids, le poids de l'absorbeur solaire 2 et le poids du film de protection 5. L'absorbeur solaire 2 est suspendu au châssis 3 et le film de protection 5 est supporté par le châssis 3.
Préférentiellement, le premier matériau isolant a un coefficient de dilatation thermique compris entre 2ppm/K et 12ppm/K et, plus particulièrement, compris entre 2ppm/K à 4ppm/K. Avantageusement, le châssis 3 se dilate très peu même en cas de mauvaise focalisation du rayonnement solaire, c'est-à-dire que même si le rayonnement solaire n'est pas focalisé sur l'absorbeur solaire 2 mais sur le châssis 3, celui se dilatera peu. Le châssis 3 peut, avantageusement, résister à des températures supérieures à 500°C sans dégradation de ses propriétés mécaniques. Préférentiellement, la conductivité thermique du matériau du châssis 3 est inférieure à 0,2W/m.K jusqu'à 500°C.

Préférentiellement, le premier matériau isolant thermique est un matériau réfractaire.
Encore plus préférentiellement, il s'agit d'un matériau réfractaire isolant façonné. Par produit réfractaire isolant façonné (norme NF EN 1094-2: 1998), on entend que le produit façonné a une porosité totale d'au moins 45% quand elle est déterminée conformément à la norme EN 1094-4. Une telle porosité permet d'obtenir de bonnes propriétés d'isolation thermique pour un matériau rigide.
Avantageusement, le châssis 3 est en matériau réfractaire pour résister à de hautes températures. Par haute température, on entend des températures supérieures à 500°C. Il peut s'agir, par exemple, d'un matériau à base de vermiculite. Un tel matériau peut être obtenu par moulage ou par extrusion par exemple.
Préférentiellement, le matériau réfractaire est à base de CaO, SiO₂, MgO, Na₂O, K₂O, Al₂O₃. Ces matériaux présentent de faibles masses volumiques de manière à avoir une conductivité thermique très faible, un faible poids tout en ayant une rigidité suffisante. Préférentiellement, le châssis 3 est à base de silice et de calcium.
Encore plus préférentiellement, le châssis 3 est en silicate de calcium, c'est-à-dire composé à plus de 85% de CaO et SiO₂. Le châssis peut contenir moins de 1% de Al₂O₃, Fe₂O₃, MgO, Na₂O et K₂O. Le produit Skamotec 225 proposé par la société danoise Skamol répond notamment à ces propriétés avantageuses. Le silicate de calcium a, avantageusement, une faible densité ou masse volumique, ce qui permet d'alléger le poids du récepteur solaire 1 tout en permettant d'avoir un châssis rigide. La masse volumique est, préférentiellement, inférieure à 300kg/m³ et, encore plus préférentiellement, inférieure ou égale à 250kg/m³.

Les matériaux à base de silicate de calcium peuvent être, avantageusement, réalisés par extrusion, ce qui permet de réaliser des châssis de grandes longueurs, de plus de cinq mètres par exemple.
La conductivité thermique des matériaux à base vermiculite ou de silicate de calcium à 300°C est, préférentiellement, comprise entre 0,05 W/m.K et 0,15 W/m.K. Préférentiellement, on choisira des matériaux à base de silicate de calcium dont la conductivité thermique à 300°C est comprise entre 0,05 W/m.K et 0,1 W/m.K, et encore plus préférentiellement, entre 0,05 W/m.K et 0,08 W/m.K. La qualité d'isolation des matériaux à base vermiculite ou de silicate de calcium présente, en plus de leurs propriétés mécaniques, d'excellentes propriétés d'isolation comparables à celles des laines isolantes classiques.

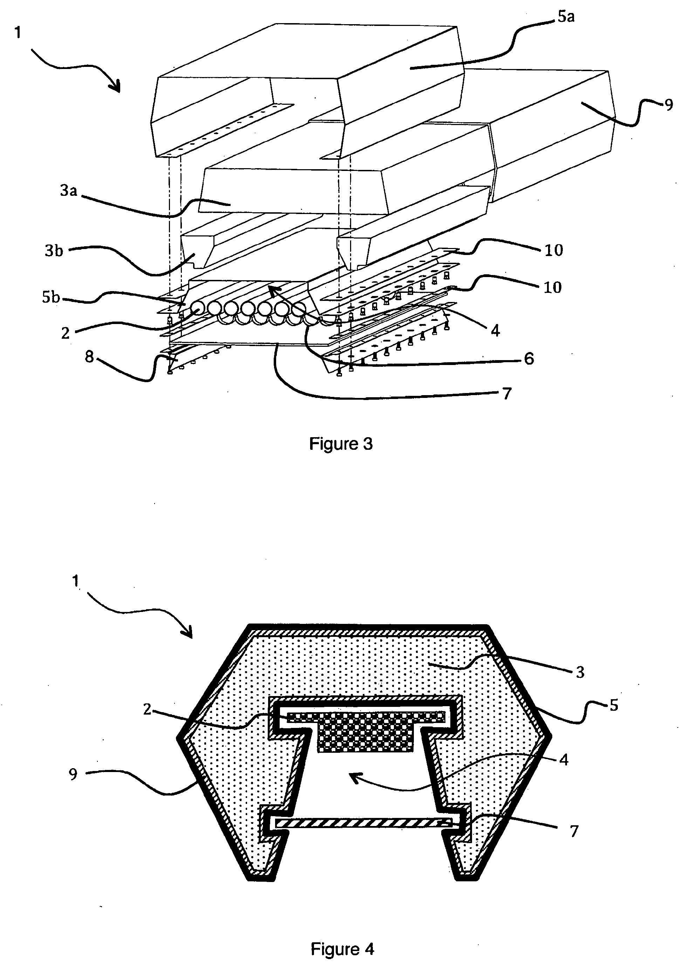

Selon un mode de réalisation particulier, le châssis 3 comporte un seul élément en premier matériau. Selon un autre mode de réalisation particulier et comme représenté sur la figure 3, le châssis 3 comporte plusieurs éléments en premier matériau superposés. Par exemple, le châssis 3 comporte un premier élément 3a en premier matériau isolant thermique et un deuxième élément 3b en premier matériau isolant thermique, lesdits premier et deuxième éléments étant encastrés dans le film de protection 5. L'utilisation de plusieurs éléments permet, avantageusement, d'utiliser des tailles de briques standard.
Le châssis 3, composé d'un seul élément en premier matériau, ou de plusieurs éléments en premier matériau, a une forme allongée. Par allongée, on entend que le châssis 3 peut être sous la forme d'un cylindre tronqué au niveau de sa section afin de former la rainure de logement 4 de l'élément absorbeur. La section peut avoir toute forme adaptée, il peut aussi s'agir d'une section hexagonale tronquée afin de former la rainure de logement 4 de l'élément absorbeur. La rainure permet le passage du rayonnement solaire jusqu'à l'absorbeur solaire 2.
Le châssis 3 a, de préférence, une géométrie simple, ce qui permet de faciliter l'intégration du film de protection 5 lors de l'assemblage, particulièrement lorsque le film de protection 5 est mis en forme par pliage.

Dans un mode de réalisation particulier, le ou les différents éléments en premier matériau sont encastrés dans un film de protection 5 déjà mis en forme. Par encastré, on entend que la forme du film de protection 5 est sensiblement complémentaire de la forme du châssis 3. Il y a peu d'espace entre le châssis 3 et le film de protection 5, le châssis 3 est positionné de manière fixe dans le film de protection 5. Le film de protection 5 recouvre intégralement la surface extérieure du châssis 3.
Le châssis 3, composé d'un ou plusieurs éléments en premier matériau, occupe au moins 80% du volume défini par le film de protection 5, et préférentiellement, le châssis 3 occupe au moins 90% du volume défini par le film de protection 5 de manière a obtenir une structure fermée et compacte. Cette structure, formée par le châssis 3 et le film de protection 5, est quasiment incompressible, ce qui permet un bon maintien mécanique de la structure et empêche sa déformation même en présence de vent par exemple.
Le film de protection 5 est, préférentiellement, en acier. Avantageusement, l'acier présente d'excellentes propriétés mécaniques. Il s'agit, par exemple, d'un acier inoxydable de type ferritique, comme un acier de la famille des AIS1430-445, ou un acier inoxydable de type austénitique, comme un acier de la famille des AISI 304 ou 316. Il peut aussi s'agir d'un acier faiblement allié galvanisé. Par faiblement allié, on entend que les éléments d'addition ne dépassent pas 5 % en masse de la masse totale de l'acier. Un alliage de nickel du type Incomel 600 peut également être utilisé s'il est prévu d'utiliser le récepteur à hautes températures (par exemple, au-dessus de 550°C).
Le film de protection 5 est, préférentiellement, en acier plié, ce qui permet d'utiliser le film de protection 5 sur de nombreuses formes de châssis 3.
Le film de protection 5 a une épaisseur comprise entre 0,1 mm et 2mm, de préférence entre 0,1mm et 1 mm, et encore plus préférentiellement, le film de protection 5 a une épaisseur comprise entre 0,4mm et 0,6mm de manière à faciliter la mise en forme du film de protection 5, par pliage par exemple. De telles épaisseurs permettent, avantageusement, d'alléger le poids du récepteur solaire 1. Le film de protection 5 peut, selon un mode de réalisation particulier, avoir une résistance suffisante pour ne pas fléchir sous son propre poids. Selon un autre mode de réalisation, le film de protection 5 ne possède pas une résistance suffisante pour ne pas fléchir sous son propre poids, c'est le châssis 3 qui supporte le poids du film de protection 5 et empêche sa déformation.
Le film de protection 5 a un coefficient de dilatation thermique compris entre 10ppm/K et 20ppm/K de manière à ne pas se déformer significativement sous l'action du rayonnement solaire focalisé.
Le film de protection 5 est disposé entre le châssis 3 et l'absorbeur solaire 2.
Le film de protection 5 permet, avantageusement, de protéger l'absorbeur des éventuelles poussières provenant du matériau réfractaire et des éventuelles espèces volatiles dégazées lors de la chauffe. De plus, il protège le châssis 3 des intempéries. La disposition du film de protection 5 entre l'absorbeur solaire 2 et le châssis permet également, en cas de mauvaise focalisation du rayonnement solaire par exemple si une partie du rayonnement est focalisé sur le film de protection ou sur une seule partie de l'absorbeur solaire 2, de mieux répartir la chaleur sur l'absorbeur solaire 2.
L'ensemble composé du châssis 3 et du film de protection 5 forme une structure du type « sandwich », le châssis 3 étant disposé entre les parois du film de protection 5.
Le film de protection 5 peut être constitué d'une seule partie, par exemple, il peut être formé par une seule feuille d'acier pliée. Selon un autre mode de réalisation, le film de protection est en deux parties : une partie dite supérieure 5a et une partie dite inférieure 5b. Les deux parties sont assemblées ensemble, par exemple, par soudage ou par tout autre système de fixation adapté tel que des vis, des rivets, des rivets filetés, etc.
Le film de protection 5, qu'il soit en une partie ou en plusieurs parties, recouvre intégralement la surface latérale du châssis 3. Par surface latérale du châssis 3, on entend que le châssis 3 comporte deux bases et une surface latérale, les deux bases sont parallèles, ou sensiblement parallèles, entre elles et correspondent aux deux plus petites surfaces du châssis 3 et la surface latérale correspond à la plus grande surface entourant le châssis 3.
Le châssis 3 est enveloppé dans le film de protection 5, ce qui permet, en cas de fissures dans le châssis 3, de maintenir les éléments fissurés entre eux et de maintenir le châssis dans une structure fermée et compacte, ce qui permet de conserver la rigidité de l'ensemble et ainsi d'allonger la durée d'utilisation du récepteur solaire 1.

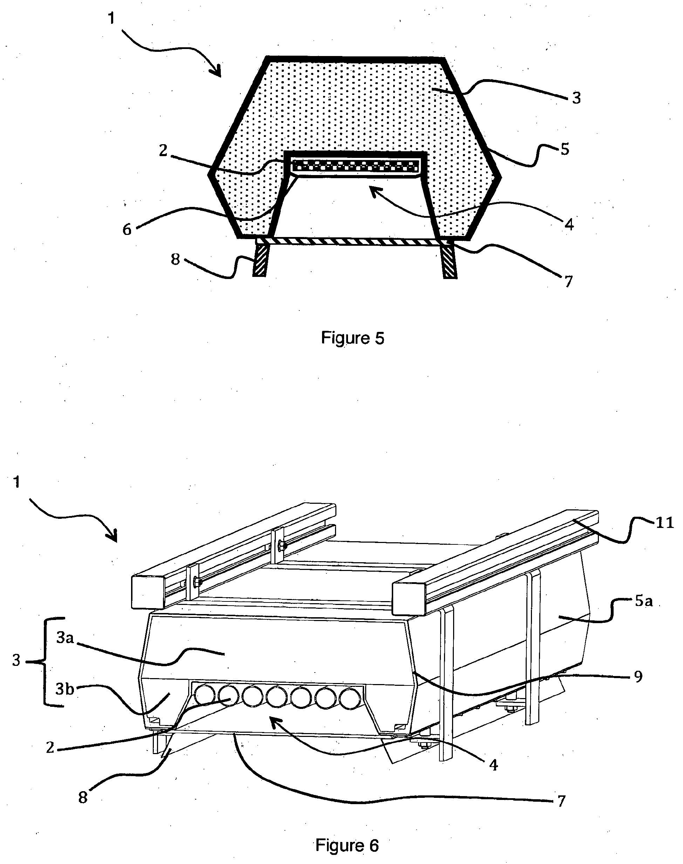

L'absorbeur solaire 2 est disposé dans un espace appelé « rainure de logement 4 de l'absorbeur solaire 2 ». Par exemple, le châssis 3 peut être sous la forme d'un U ou d'un oméga, de manière à former une cavité ouverte dans laquelle est disposé l'absorbeur solaire 2. Le châssis 3 en premier matériau isolant est structuré pour définir une rainure de logement 4 de l'absorbeur solaire 2.
Par rainure, on entend une longue entaille dans une pièce. La rainure de logement 4 est disposée, avantageusement, sur toute la longueur du châssis 3. La rainure de logement 4 est délimitée par le fond du châssis et par les deux parois latérales du châssis. Elle comprend tout le volume situé entre le fond et les parois latérales du châssis, ce volume correspond au volume de la cavité ouverte.
Selon un mode de réalisation particulier et comme représenté sur les figures 2 et 4, le châssis 3 comporte deux encoches, se faisant face, configurées pour loger et maintenir l'absorbeur solaire 2, c'est-à-dire configurées pour former le système de maintien de l'absorbeur solaire 2. Par encoche, on entend de petites découpes. Les encoches sont faites dans les parois latérales du châssis et disposées de telle façon que l'élément inséré dans les encoches, et donc maintenu par les encoches, est sensiblement parallèle au fond du châssis.
Le poids de l'absorbeur est supporté par le châssis 3, c'est-à-dire que le film de protection 5 seul fléchirait sous le poids de l'absorbeur, voire même sous son propre poids.
Selon un autre mode de réalisation et comme représenté sur les figures 3 et 5, l'absorbeur solaire 2 est maintenu par un système de fixation de type dit «ceinture » 6. Cette « ceinture » 6 comporte un élément sous la forme d'un fil ou d'un ruban, par exemple, permettant de maintenir l'absorbeur solaire 2 dans la rainure de logement 4. Le système de fixation de type « ceinture » 6 est, par exemple, maintenu au film de protection 5 par soudage ou encore il peut être maintenu par vissage sur le film de protection 5 et sur le châssis 3. Avantageusement, il est fixé au film de protection 5 et au châssis 3 pour obtenir une meilleure fixation.
Selon un autre mode de réalisation, le système de fixation est uniquement fixé au film de protection 5, ce qui permet, avantageusement, de permettre au film de protection 5 et au châssis 3, ayant des coefficients de dilation différents, de pouvoir glisser localement l'un par rapport à l'autre.

Selon un mode de réalisation et comme représenté sur les figures 2 à 6, le récepteur solaire 1 comporte une vitre 7, l'absorbeur solaire 2 étant disposé entre le film de protection 5 et la vitre.
Selon un mode particulier de réalisation et comme représenté sur les figures 2 et 4, le châssis 3 comporte deux encoches, se faisant face, configurées pour maintenir la vitre 7. Les encoches destinées à maintenir la vitre 7 et les encoches destinées à maintenir l'absorbeur solaire 2 sont, avantageusement parallèles, de manière à ce que l'absorbeur solaire 2 et la vitre 2 soient disposés dans des plans parallèles.
Le film de protection 5, ayant un profil complémentaire du châssis 3, comporte également deux encoches de manière à loger la vitre.
Selon un autre mode de réalisation particulier et comme représenté sur les figures 3, 5 et 6, la vitre 7 est maintenue au film de protection 5 par des éléments de fixation 8. Avantageusement, les éléments de fixation 8 sont configurés pour créer une zone de turbulence de l'air au niveau de la vitre afin d'assurer un refroidissement de celle-ci.
La vitre 7 est, par exemple, en borosilicate. Avantageusement, la vitre 7 a une excellente transparence au rayonnement solaire et a un coefficient de dilatation thermique faible de manière à être résistante à des gradients thermiques importants. Le rayonnement lumineux passe à travers la vitre avant de frapper l'absorbeur solaire et chauffer le fluide caloporteur.
Dans le cas d'un mode de réalisation comprenant une vitre, la rainure de logement 4 est délimitée par le fond du châssis et par les deux parois latérales du châssis et par la vitre 7. Elle comprend tout le volume situé entre le fond et les parois latérales du châssis et la vitre 7.

Selon un mode de réalisation particulier et comme représenté sur les figures 3, 5 et 6, un deuxième matériau isolant 9 est disposé entre le châssis en premier matériau isolant et le film de protection 5. S'il y a plusieurs éléments en premier matériau 3a et 3b, le deuxième matériau isolant 9 est disposé entre ces éléments en premier matériau 3a et 3b et le film de protection 5.
Le deuxième matériau isolant 9 est souple. La souplesse est notamment qualifiée par la norme ASTM C 1101. Selon un mode de réalisation préférentiel, le matériau isolant est « souple résistant », c'est-à-dire pouvant être déformé de manière inélastique tout en conservant une certaine élasticité. Avantageusement, cette nappe est suffisamment souple de manière à épouser le contour du ou des premiers éléments. De cette manière, le châssis 3 fixe la forme générale du récepteur 1 et le deuxième matériau isolant permet de faciliter l'association du châssis 3 avec le film de protection en absorbant une partie des écarts dimensionnels qui existent entre le châssis 3 et le film de protection 5.
Le deuxième matériau isolant 9 est, avantageusement, sous la forme d'un film. Le deuxième matériau isolant 9 peut être comprimé jusqu'à 80% de son épaisseur initiale, ce qui permet de combler l'espace éventuel entre le premier matériau isolant et le film de protection 5. Le deuxième matériau isolant 9 épouse, préférentiellement, la surface interne du film de protection 5. Avantageusement, le deuxième matériau isolant 9 n'est pas comprimé à plus de 50% de son épaisseur initiale afin de ne pas diminuer significativement ses performances en terme d'isolation thermique.

La compressibilité du deuxième matériau isolant 9 permet de faciliter l'assemblage du châssis 3 et du film de protection 5. Il permet, par exemple, plus de liberté concernant le jeu entre le film de protection 5 et le premier matériau.
Le deuxième matériau isolant 9 a un coefficient de dilatation thermique compris entre 2ppm/K et 12ppm/K de manière à ne pas perdre ses propriétés mécaniques, comme la souplesse, sous l'action du rayonnement solaire incident.
Préférentiellement, le deuxième matériau isolant 9 a une conductivité thermique inférieure à 0,15W/m.K à 500°C.
Préférentiellement, le deuxième matériau isolant 9 est composé de matériaux souples. Selon un mode de réalisation préférentiel, les matériaux souples sont à base de matelas de fibres minérales, non obtenues par des méthodes de frittage.
Préférentiellement, le deuxième matériau isolant thermique est sous forme de laine ou de nappe. Les termes laine et nappe sont définis par la norme NF EN 1094-1 : 2008. Par laine, on entend une agglomération non directionnelle de fibres de diamètre et de longueur variables. Par nappe, on entend un matelas souple, aiguilleté et de dimensions nominales définies.
Préférentiellement, le deuxième matériau isolant est à base de fibres de verre ou de céramique, par exemple le deuxième matériau isolant est à base de silice SiO₂ ou d'alumine Al₂O₃. Il peut contenir également des éléments additionnels choisis, par exemple, parmi les oxydes Fe₂O₃, TiO₂ ou MgO. L'élément additionnel peut aussi être du trihydrate d'aluminium. Par éléments additionnels, on entend que le deuxième matériau contient moins de 10% volumique de ces éléments. Avantageusement, ceci permet d'obtenir une meilleure souplesse du matériau et une meilleure isolation thermique.
Le deuxième matériau isolant 9 a une épaisseur comprise entre 2mm et 15mm, et préférentiellement, autour de 8mm.

Le châssis 3, composé d'un ou plusieurs éléments en premier matériau, et le deuxième matériau élément occupent au moins 95% du volume défini par le film de protection 5

Le récepteur solaire 1 peut également contenir au moins un miroir dit miroir secondaire et disposé de manière à réfléchir le rayonnement solaire sur l'absorbeur solaire 2, en cas de mauvaise focalisation des miroirs. Le miroir secondaire, est par exemple disposé sur les côtés de la rainure de logement 4 de l'absorbeur solaire 2.
Le miroir secondaire peut être un miroir en aluminium, une vitre sur laquelle a été déposée une fine couche d'aluminium, ladite couche d'aluminium étant éventuellement recouverte par un matériau céramique, ou, encore, il peut s'agir d'un miroir élaboré à partir d'une vitre équipée de réflecteurs interférentiels.

Les formes choisies pour la construction du récepteur solaire ont été sélectionnées pour leur facilité de fabrication : capacité de pliage des tôles, façonnage des isolants avec des dimensions de briques standards, utilisation de vitre plane, etc.

Le procédé de réalisation d'un récepteur solaire 1 comporte les étapes successives suivantes :
- fournir un châssis 3 en un premier matériau ayant un module de rupture supérieur à 1 MPa,
- recouvrir intégralement la surface latérale extérieure du châssis 3 par un film de protection 5,
- fixer un absorbeur solaire 2, comprenant au moins un dispositif de circulation d'un fluide destiné à être parcouru par un fluide caloporteur, sur l'ensemble formé par le châssis 3 et le film de protection 5.

Par exemple, pour assembler un récepteur solaire 1 comportant un film de protection 5 muni d'une partie supérieure 5a et d'une partie inférieure 5b, les étapes suivantes sont réalisées :
- déposer le châssis 3 dans la partie supérieure 5a du film de protection 5,
- déposer la partie inférieure 5b du film de protection 5 sur le châssis 3,
- fixer les parties supérieure 5a et inférieure 5b du film de protection 5 par toute technique adaptée, par exemple grâce à des rivets filetés, par soudage par point ou encore par pliage de languettes,
- fixer l'absorbeur solaire 2, comprenant au moins un dispositif de circulation d'un fluide destiné à être parcouru par un fluide caloporteur, sur l'ensemble formé par le châssis 3 et le film de protection 5 composés de deux parties réunies, par exemple avec un système de maintien de type ceinture 6.

Le système de type « ceinture » 6 est fixé par soudage ou par vissage, sur l'ensemble formé par le châssis 3 et le film de protection 5. Plusieurs système de type ceinture 6 peuvent être utilisés, par exemple tous les mètres, afin d'améliorer la fixation et le maintien de l'absorbeur solaire 2. Avantageusement, ces systèmes de fixation permettent de diminuer le nombre de plis de la coque métallique de 30%.
Des pièces isolantes 10 peuvent aussi être disposées à la jonction des parties supérieure 5a et inférieure 5b du film de protection 5 afin de limiter le transfert de chaleur. Il peut s'agir par exemple de patins en Mica.

Dans le cas des centrales solaires à concentration de type Fresnel, le récepteur a pour finalité d'être suspendu au-dessus d'un champ de miroir. Après assemblage, le récepteur solaire 1 peut être disposé sur une structure haubanée, par exemple. La structure haubanée permet de positionner le récepteur solaire 1 en hauteur, à 10 mètres de haut par exemple. Comme représenté sur la figure 6, selon un mode de réalisation particulier, le récepteur solaire 1 est maintenu sur la structure haubanée grâce à un système d'accrochage 11 disposé au-dessus du récepteur solaire 1.
Préférentiellement, le récepteur solaire 1 est maintenu sur la structure haubanée par-dessus, c'est-à-dire du côté opposé à l'absorbeur solaire 2 afin de ne pas ombrager l'absorbeur solaire 2 et le champ de miroir.

Selon un mode de réalisation particulier, un deuxième matériau isolant 9 thermique souple est disposé entre le film de protection 5 et le premier matériau isolant thermique rigide.
Avantageusement, le châssis 3 est recouvert par le deuxième matériau isolant 9 avant d'être déposé dans la partie supérieure 5a du film de protection 5.

Comme représenté sur la figure 3, le deuxième matériau isolant 9 peut être, s'il est composé d'une seule pièce, enfiler autour du châssis 3. Le deuxième matériau isolant peut être, s'il est composé de deux pièces, disposés de part et d'autre autour du châssis 3 de manière à recouvrir la surface latérale du châssis 3. Un système de fixation est, a avantageusement, utilisé de manière à maintenir les deux pièces en deuxième matériau ensemble. Il peut s'agir par exemple d'un dispositif utilisant une ou plusieurs agrafes.

Selon un mode de réalisation préférentiel, le châssis 3 comporte un premier élément 3a en premier matériau isolant thermique et un deuxième élément 3b en premier matériau isolant thermique encastrés dans le film de protection 5. Le film de protection 5 a une épaisseur comprise entre 0,1 mm et 1 mm.
Le deuxième matériau isolant 9, sous forme de laine ou de nappe, est disposé entre le film de protection 5 et les premier 3a et deuxième 3b éléments en premier matériau isolant.

Une vitre peut être fixée sur le récepteur après l'assemblage du châssis 3 et du film de protection 5.

La solution proposée est très simple à mettre en oeuvre et nécessite l'emploi d'un minimum de matériau métallique. Les couts de fabrication sont alors réduits. Il est alors possible d'utiliser des alliages inoxydables résistants à des conditions d'utilisation (atmosphère humide, éventuellement marine, température jusqu'à 500°C) qui dégraderaient rapidement des aciers galvanisés ou non ; on améliore ainsi la durée de vie du récepteur solaire 1.

## Revendications

1. Récepteur solaire (1) pour centrale à concentration de type Fresnel comportant :
- un absorbeur solaire (2) comprenant au moins un dispositif de circulation d'un fluide destiné à être parcouru par un fluide caloporteur,
- un châssis (3) en premier matériau isolant thermique structuré pour définir une rainure de logement (4) de l'absorbeur solaire (2), le premier matériau isolant thermique ayant un module de rupture supérieur à 1 MPa,
- un système de maintien de l'absorbeur solaire (2) avec le châssis (3),
- un film de protection (5) recouvrant intégralement la surface latérale extérieure du châssis (3) de sorte à être disposé entre le châssis (3) et l'absorbeur solaire (2).

2. Récepteur solaire (1) selon la revendication 1, **caractérisé en ce que** le premier matériau isolant thermique est un matériau réfractaire.

3. Récepteur solaire (1) selon la revendication 2, **caractérisé en ce que** le premier matériau isolant thermique est à base de silice et de calcium, préférentiellement en silicate de calcium.

4. Récepteur solaire (1) selon l'une quelconque des revendications 1 à 3, **caractérisé en ce que** le premier matériau isolant thermique a un coefficient de dilatation thermique compris entre 2ppm/K et 12ppm/K, et de préférence, entre 2ppm/K et 4ppm/K.

5. Récepteur solaire (1) selon l'une quelconque des revendications 1 à 4, **caractérisé en ce que** le châssis (3) occupe au moins 90% du volume défini par le film de protection (5).

6. Récepteur solaire (1) selon l'une quelconque des revendications 1 à 5, **caractérisé en ce que** le film de protection (5) est en acier plié.

7. Récepteur solaire (1) selon l'une quelconque des revendications 1 à 6, **caractérisé en ce que** le film de protection (5) a une épaisseur comprise entre 0,1 mm et 1 mm, et, de préférence, entre 0,4mm et 0,6mm.

8. Récepteur solaire (1) selon l'une quelconque des revendications 1 à 7, **caractérisé en ce que** le film de protection (5) a un coefficient de dilatation thermique compris entre 10ppm/K et 20ppm/K.

9. Récepteur solaire (1) selon l'une quelconque des revendications 1 à 8, **caractérisé en ce que** le châssis (3) comporte deux encoches, se faisant face, configurées pour former le système de maintien de l'absorbeur solaire (2).

10. Récepteur solaire (1) selon l'une quelconque des revendications 1 à 9, **caractérisé en ce que** le châssis (3) comporte deux encoches, se faisant face, configurées pour maintenir une vitre (7).

11. Récepteur solaire (1) selon l'une quelconque des revendications 1 à 9, **caractérisé en ce qu'**il comporte une vitre (7), l'absorbeur solaire (2) étant disposé entre le film de protection (5) et la vitre (7), la vitre (7) étant maintenue au film de protection (5) par des éléments de fixation (8), configurés pour créer une zone de turbulence de l'air au niveau de la vitre (7).

12. Récepteur solaire (1) selon l'une quelconque des revendications 1 à 11, **caractérisé en ce que** le châssis (3) comporte un premier élément (3a) en premier matériau isolant thermique et un deuxième élément (3b) en premier matériau isolant thermique encastrés dans le film de protection (5).

13. Récepteur solaire (1) selon l'une quelconque des revendications 1 à 12, **caractérisé en ce qu'**un deuxième matériau isolant thermique (9) est disposé entre le châssis (3) en premier matériau isolant thermique et le film de protection (5).

14. Récepteur solaire (1) selon la revendication 13, **caractérisé en ce que** le deuxième matériau isolant thermique (9) est sous forme de laine ou de nappe.

15. Récepteur solaire (1) selon l'une des revendications 13 et 14, **caractérisé en ce que** le deuxième matériau isolant thermique (9) est composé de fibres de verre ou de céramique.

16. Récepteur solaire (1) selon l'une quelconque des revendications 13 à 15, **caractérisé en ce que** le deuxième matériau isolant thermique (9) a une épaisseur comprise entre 2mm et 15mm.

17. Récepteur solaire (1) selon l'une quelconque des revendications 13 à 16, **caractérisé en ce que** le deuxième matériau isolant thermique (9) a un coefficient de dilatation thermique compris entre 2ppm/K et 12ppm/K.

18. Procédé de réalisation d'un récepteur solaire (1) pour centrale à concentration de type Fresnel comportant les étapes successives suivantes :
- fournir un châssis (3) en premier matériau isolant thermique, le premier matériau isolant thermique ayant un module de rupture supérieur à 1 MPa,
- recouvrir intégralement la surface latérale extérieure du châssis (3) par un film de protection (5),
- fixer un absorbeur solaire (2), comprenant au moins un dispositif de circulation d'un fluide destiné à être parcouru par un fluide caloporteur, sur l'ensemble formé par le châssis (3) et le film de protection (5).

19. Procédé de réalisation selon la revendication 18, **caractérisé en ce que** le châssis (3) comporte un premier élément (3a) en premier matériau isolant thermique et un deuxième élément (3b) en premier matériau isolant thermique encastrés dans le film de protection (5).

20. Procédé de réalisation selon la revendication 19, **caractérisé en ce qu'**un deuxième matériau isolant (9), sous forme de laine ou de nappe, est disposé entre le film de protection (5) et les premier (3a) et deuxième (3b) éléments en premier matériau isolant.

21. Procédé de réalisation selon l'une quelconque des revendications 18 à 20, **caractérisé en ce que** le film de protection (5) a une épaisseur comprise entre 0,1 mm et 1 mm.

## Patentansprüche

1. Solarempfänger (1) für ein Solarkraftwerk vom Typ Fresnel, umfassend:
- einen Solarabsorber (2), der wenigstens eine Vorrichtung zur Zirkulation eines Fluids umfasst, welche dazu bestimmt ist, von einem Wärmeübertragungsmittel durchlaufen zu werden,
- einen Rahmen (3) aus strukturiertem erstem Wärmeisolationsmaterial, um eine Nut (4) zur Aufnahme des Solarabsorbers (2) zu definieren, wobei das erste Wärmeisolationsmaterial einen Bruchmodul größer als 1 MPa aufweist,
- ein System zum Halten des Solarabsorbers (2) mit dem Rahmen (3),
- einen Schutzfilm (5), der die äußere Seitenfläche des Rahmens (3) vollständig überzieht, so dass er zwischen dem Rahmen (3) und dem Solarabsorber (2) angeordnet ist.

2. Solarempfänger (1) nach Anspruch 1, **dadurch gekennzeichnet, dass** das erste Wärmeisolationsmaterial ein feuerfestes Material ist.

3. Solarempfänger (1) nach Anspruch 2, **dadurch gekennzeichnet, dass** das erste Wärmeisolationsmaterial auf der Basis von Siliziumdioxid und Kalzium ist, vorzugsweise aus Kalziumsilikat besteht.

4. Solarempfänger (1) nach einem der Ansprüche 1 bis 3, **dadurch gekennzeichnet, dass** das erste Wärmeisolationsmaterial einen Wärmeausdehnungskoeffizienten zwischen 2 ppm/K und 12 ppm/K und vorzugsweise zwischen 2 ppm/K und 4 ppm/K aufweist.

5. Solarempfänger (1) nach einem der Ansprüche 1 bis 4, **dadurch gekennzeichnet, dass** der Rahmen (3) wenigstens 90 % des durch den Schutzfilm (5) definierten Volumens einnimmt.

6. Solarempfänger (1) nach einem der Ansprüche 1 bis 5, **dadurch gekennzeichnet, dass** der Schutzfilm (5) aus gebogenem Stahl besteht.

7. Solarempfänger (1) nach einem der Ansprüche 1 bis 6, **dadurch gekennzeichnet, dass** der Schutzfilm (5) eine Dicke zwischen 0,1 mm und 1 mm und vorzugsweise zwischen 0,4 mm und 0,6 mm aufweist.

8. Solarempfänger (1) nach einem der Ansprüche 1 bis 7, **dadurch gekennzeichnet, dass** der Schutzfilm (5) einen Wärmeausdehnungskoeffizienten zwischen 10 ppm/K und 20 ppm/K aufweist.

9. Solarempfänger (1) nach einem der Ansprüche 1 bis 8, **dadurch gekennzeichnet, dass** der Rahmen (3) zwei einander gegenüberliegende Einkerbungen umfasst, die dazu ausgebildet sind, das System zum Halten des Solarabsorbers (2) zu bilden.

10. Solarempfänger (1) nach einem der Ansprüche 1 bis 9, **dadurch gekennzeichnet, dass** der Rahmen (3) zwei einander gegenüberliegende Einkerbungen umfasst, die dazu ausgebildet sind, eine Scheibe (7) zu halten.

11. Solarempfänger (1) nach einem der Ansprüche 1 bis 9, **dadurch gekennzeichnet, dass** er eine Scheibe (7) umfasst, wobei der Solarabsorber (2) zwischen dem Schutzfilm (5) und der Scheibe (7) angeordnet ist, wobei die Scheibe (7) durch Befestigungselemente (8), welche dazu ausgebildet sind, im Bereich der Scheibe (7) einen Luftturbulenzbereich zu erzeugen, an dem Schutzfilm (5) gehalten ist.

12. Solarempfänger (1) nach einem der Ansprüche 1 bis 11, **dadurch gekennzeichnet, dass** der Rahmen (3) ein erstes Element (3a) aus erstem Wärmeisolationsmaterial und ein zweites Element (3b) aus erstem Wärmeisolationsmaterial, die in den Schutzfilm (5) eingebaut sind, umfasst.

13. Solarempfänger (1) nach einem der Ansprüche 1 bis 12, **dadurch gekennzeichnet, dass** ein zweites Wärmeisolationsmaterial (9) zwischen dem Rahmen (3) aus erstem Wärmeisolationsmaterial und dem Schutzfilm (5) angeordnet ist.

14. Solarempfänger (1) nach Anspruch 13, **dadurch gekennzeichnet, dass** das zweite Wärmeisolationsmaterial (9) in Form von Wolle oder Vlies vorliegt.

15. Solarempfänger (1) nach einem der Ansprüche 13 und 14, **dadurch gekennzeichnet, dass** das zweite Wärmeisolationsmaterial (9) aus Glas- oder Keramikfasern besteht.

16. Solarempfänger (1) nach einem der Ansprüche 13 bis 15, **dadurch gekennzeichnet, dass** das zweite Wärmeisolationsmaterial (9) eine Dicke zwischen 2 mm und 15 mm aufweist.

17. Solarempfänger (1) nach einem der Ansprüche 13 bis 16, **dadurch gekennzeichnet, dass** das zweite Wärmeisolationsmaterial (9) einen Wärmeausdehnungskoeffizienten zwischen 2 ppm/K und 12 ppm/K aufweist.

18. Verfahren zur Herstellung eines Solarempfängers (1) für ein Solarkraftwerk vom Typ Fresnel, welches die folgenden aufeinanderfolgenden Schritte umfasst:
- Bereitstellen eines Rahmens (3) aus erstem Wärmeisolationsmaterial, wobei das erste Wärmeisolationsmaterial einen Bruchmodul größer als 1 MPa aufweist,
- vollständiges Überziehen der äußeren Seitenfläche des Rahmens (3) mit einem Schutzfilm (5),
- Befestigen eines Solarabsorbers (2), der wenigstens eine Vorrichtung zur Zirkulation eines Fluids umfasst, welche dazu bestimmt ist, von einem Wärmeübertragungsmittel durchlaufen zu werden, an der durch den Rahmen (3) und den Schutzfilm (5) gebildeten Anordnung.

19. Herstellungsverfahren nach Anspruch 18, **dadurch gekennzeichnet, dass** der Rahmen (3) ein erstes Element (3a) aus erstem Wärmeisolationsmaterial und ein zweites Element (3b) aus erstem Wärmeisolationsmaterial, die in den Schutzfilm (5) eingebaut sind, umfasst.

20. Herstellungsverfahren nach Anspruch 19, **dadurch gekennzeichnet, dass** ein zweites Isolationsmaterial (9) in Form von Wolle oder Vlies zwischen dem Schutzfilm (5) und den ersten (3a) und zweiten (3b) Elementen aus erstem Isolationsmaterial angeordnet ist.

21. Herstellungsverfahren nach einem der Ansprüche 18 bis 20, **dadurch gekennzeichnet, dass** der Schutzfilm (5) eine Dicke zwischen 0,1 mm und 1 mm aufweist.

## Claims

1. A solar receiver (1) for a Fresnel-type concentrating solar power plant comprising:
- a solar absorber (2) comprising at least one fluid circulation device designed to have a heat conducting fluid flowing therein,
- a frame (3) made from a first thermal insulating material structured to define a housing groove (4) of the solar absorber (2), the first thermal insulating material having a modulus of rupture greater than 1 MPa,
- an attachment system of the solar absorber (2) with the frame (3),
- a protection film (5) completely covering the outer lateral surface of the frame (3) so as to be located between the frame (3) and the solar absorber (2).

2. The solar receiver (1) according to claim 1, **characterized in that** the first thermal insulating material is a refractory material.

3. The solar receiver (1) according to claim 2, **characterized in that** the first thermal insulating material is a silica and calcium based material, preferably being made from calcium silicate.

4. The solar receiver (1) according to any one of claims 1 to 3, **characterized in that** the first thermal insulating material has a thermal expansion coefficient comprised between 2ppm/K and 12ppm/K, and preferably between 2ppm/K and 4ppm/K.

5. The solar receiver (1) according to any one of claims 1 to 4, **characterized in that** the frame (3) occupies at least 90% of the volume defined by the protection film (5).

6. The solar receiver (1) according to any one of claims 1 to 5, **characterized in that** the protection film (5) is made from folded steel.

7. The solar receiver (1) according to any one of claims 1 to 6, **characterized in that** the protection film (5) has a thickness comprised between 0.1 mm and 1 mm, and preferably between 0.4mm and 0.6mm.

8. The solar receiver (1) according to any one of claims 1 to 7, **characterized in that** the protection film (5) has a thermal expansion coefficient comprised between 10ppm/K and 20ppm/K.

9. The solar receiver (1) according to any one of claims 1 to 8, **characterized in that** the frame (3) comprises two notches, facing one another, configured to form the attachment system of the solar absorber (2).

10. The solar receiver (1) according to any one of claims 1 to 9, **characterized in that** the frame (3) comprises two notches, facing one another, configured to secure a glass panel (7).

11. The solar receiver (1) according to any one of claims 1 to 9, **characterized in that** it comprises a glass panel (7), the solar absorber (2) being arranged between the protection film (5) and the glass panel (7), the glass panel (7) being secured to the protection film (5) by attachment elements (8) configured to create an air turbulence area at the level of the glass panel (7).

12. The solar receiver (1) according to any one of claims 1 to 11, **characterized in that** the frame (3) comprises a first element (3a) made from the first thermal insulating material and a second element (3b) made from the first thermal insulating material embedded in the protection film (5).

13. The solar receiver (1) according to any one of claims 1 to 12, **characterized in that** a second thermal insulating material (9) is arranged between the frame (3) made from the first thermal insulating material and the protection film (5).

14. The solar receiver (1) according to claim 13, **characterized in that** the second thermal insulating material (9) is in the form of wool or a blanket.

15. The solar receiver (1) according to one of claims 13 and 14, **characterized in that** the second thermal insulating material (9) is composed of glass fibres or ceramic.

16. The solar receiver (1) according to any one of claims 13 to 15, **characterized in that** the second thermal insulating material (9) has a thickness comprised between 2mm and 15mm.

17. The solar receiver (1) according to any one of claims 13 to 16, **characterized in that** the second thermal insulating material (9) has a thermal expansion coefficient comprised between 2ppm/K and 12ppm/K.

18. A manufacturing method of a solar receiver (1) for a Fresnel-type concentrating solar plant comprising the following successive steps:
- providing a frame (3) made from a first thermal insulating material, the first thermal insulating material having a modulus of rupture greater than 1 MPa,
- completely covering the outer lateral surface of the frame (3) by a protection film (5),
- fixing a solar absorber (2), comprising at least one fluid circulation device designed to have a heat conducting fluid flowing therein, on the assembly formed by the frame (3) and the protection film (5).

19. The manufacturing method according to claim 18, **characterized in that** the frame (3) comprises a first element (3a) made from the first thermal insulating material and a second element (3b) made from the first thermal insulating material embedded in the protection film (5).

20. The manufacturing method according to claim 19, **characterized in that** a second insulating material (9), in the form of wool or of a blanket, is arranged between the protection film (5) and the first element (3a) and second element (3b) made from the first insulating material.

21. The manufacturing method according to any one of claims 18 to 20, **characterized in that** the protection film (5) has a thickness comprised between 0.1mm and 1mm.
